# FASCICULE DE BREVET EUROPEEN

(11) **EP 0 726 468 B1**
(45) Date de publication et mention de la délivrance du brevet: **09.08.2000**
(21) Numéro de dépôt: 96400235.6
(22) Date de dépôt: 05.02.1996
(51) Int. Cl.: G01P 3/44

(54) **Dispositif de codeur pour capteur de vitesse de rotation et roulement équipé d'un tel dispositif**
Kodiervorrichtung für Geschwindigkeitsmessaufnehmer sowie ein mit einer solchen Vorrichtung versehenes Wälzlager
Encoder device for speed sensor and roll bearing equipped with such a device

(30) Priorité: 09.02.1995 FR 9501515
(43) Date de publication de la demande: 14.08.1996
(73) Titulaire: SKF FRANCE, F-92140 Clamart (FR)
(72) Inventeur: Rigaux, Christian, F-37260 Artannes sur Indre (FR); Maestrati, Jean-François, F-37300 Joue-les-Tours (FR)
(74) Mandataire: Casalonga, Axel

(56) Documents cités:
- EP-A- 0 420 041
- FR-A- 2 655 735
- GB-A- 2 259 987

## Description

L'invention concerne un dispositif de codeur pour palier, dans lequel un organe tournant du palier porte ledit codeur constitué par un anneau à aimantation multipolaire destiné à générer un champ magnétique variable devant un capteur solidaire d'un élément fixe. Un tel dispositif permet de déterminer la vitesse de rotation de l'élément tournant supportant le codeur. Un tel dispositif peut être par exemple monté sur un palier à roulement de roue de véhicule couplé à un système de freinage antiblocage de type ABS.

On connaît par le brevet français n° 2 655 735 (SKF) un dispositif de capteur de vitesse de rotation dont le codeur solidaire de la bague tournante du palier est placé en regard de l'élément capteur solidaire de la bague non tournante du palier.

On connaît également par la demande de brevet français publiée n° 2 700 588 (SNR) un dispositif de montage à joint d'étanchéité à codeur incorporé. Le codeur est monté sur la face latérale extérieure d'un disque monté sur un support tournant.

Un inconvénient de ces types de codeurs réside dans le fait que, l'anneau multipolaire étant disposé sur la face externe d'un support, la surface active dudit codeur destinée à venir en regard du capteur est mal protégée et est particulièrement exposée à des agressions de toutes sortes. C'est ainsi que, si un tel codeur est monté sur un palier, la surface active peut être facilement endommagée lors du montage du codeur dans le palier ou bien lors de la manutention du palier. En fonctionnement, de tels types de codeurs ne sont pas bien protégés vis-à-vis des agressions extérieures et peuvent, dans certaines applications, telles que des roulements de roues de véhicules, être soumises à des projections et à des pollutions diverses qui pourraient à la longue altérer les caractéristiques de fonctionnement du codeur.

L'invention a donc pour objet un dispositif de codeur pour capteur de vitesse de rotation du type décrit précédemment, dans lequel le codeur est parfaitement isolé du milieu extérieur par des moyens de protection efficaces, sans altération du champ magnétique émis par le codeur.

Un autre objet de l'invention est de réaliser un dispositif de codeur pour capteur de vitesse ne risquant pas d'être endommagé avant ou pendant le montage du palier.

Un autre objet de l'invention est de réaliser un dispositif de codeur pour capteur de vitesse dont la fiabilité est améliorée grâce à un tel codeur.

Un autre objet de l'invention est de réaliser un codeur dont les moyens de protection sont également des moyens de support rigides afin de maintenir une bonne coaxialité du codeur par rapport au roulement.

Selon l'invention, le dispositif de codeur pour capteur de vitesse de rotation d'un organe tournant d'un palier monté sur un organe non tournant dudit palier, du type comprenant un capteur solidaire d'un élément fixe par rapport à l'organe non tournant et devant lequel défile en rotation et avec un faible entrefer un élément formant rotor muni d'un codeur, est capable de produire dans le capteur un signal périodique de fréquence proportionnelle à la vitesse de rotation de l'élément rotor. Le codeur sous forme d'un anneau aimanté multipolaire, est fixé sur une face interne d'un élément de protection et de support rigide et réalisé en matériau métallique amagnétique. Une face externe correspondante de l'élément de protection défile en rotation devant ledit capteur.

Dans un mode de réalisation de l'invention, l'élément de protection et de support comprend au moins une partie radiale en contact avec le codeur.

Dans un mode de réalisation de l'invention, le capteur est disposé axialement par rapport au codeur et le codeur avec l'élément de protection et de support est entièrement logé à l'intérieur du palier.

Avantageusement, l'élément de protection et de support peut comprendre une première partie axiale emmanchée sur l'organe tournant du palier, une partie radiale en contact avec le codeur et une deuxième partie axiale en contact avec le codeur.

Avantageusement, l'élément de protection et de support peut comprendre une partie axiale emmanchée sur l'organe tournant du palier et en contact avec le codeur, une partie radiale en contact avec le codeur et une partie oblique s'étendant en direction de l'organe non tournant du palier.

Dans un mode de réalisation de l'invention, l'élément de protection et de support comprend au moins une partie axiale en contact avec le codeur. L'élément de protection et de support peut être emmanché sur le diamètre extérieur de l'organe tournant du palier.

Dans un mode de réalisation de l'invention, le capteur est disposé radialement par rapport au codeur et le codeur fait saillie par rapport au palier.

Avantageusement, le codeur peut être entouré sur trois côtés par l'élément de protection et de support.

Dans un mode de réalisation de l'invention, le palier est muni d'un moyen d'étanchéité qui comprend un joint souple coopérant avec ledit élément de protection et de support.

Dans un mode de réalisation préféré de l'invention, une lèvre d'un joint d'étanchéité du palier est en contact avec une partie axiale de l'élément de protection et de support emmanchée sur l'organe tournant du palier.

Avantageusement, une partie de l'élément de protection et de support située à proximité de l'organe non tournant du palier peut être munie d'un joint d'étanchéité à lèvres en contact avec ledit organe non tournant du palier.

Dans un autre mode de réalisation de l'invention, une partie de l'élément de protection et de support située à proximité de l'organe non tournant du palier est munie d'un joint d'étanchéité à lèvres en contact avec un support d'un joint d'étanchéité du palier solidaire de l'organe non tournant du palier.

Dans un mode de réalisation de l'invention, un élément de protection supplémentaire comprenant une partie axiale emmanchée sur l'organe non tournant du palier, en contact avec une lèvre d'un joint d'étanchéité fixé sur l'élément de protection et de support, et une partie radiale s'étendant en direction de l'organe tournant du palier de façon à former un passage étroit avec ledit organe tournant du palier.

Dans un autre mode de réalisation de l'invention, l'élément de protection et de support comprend une partie coopérant avec l'organe non tournant du palier pour former un passage étroit.

Dans un mode de réalisation de l'invention, le codeur est surmoulé sur l'élément de protection et de support. Avantageusement, l'élément de protection et de support est muni de déformations ou d'enlèvements de matière localisés servant d'ancrage au codeur.

Dans un autre mode de réalisation de l'invention, le codeur est introduit à force dans l'élément de protection et de support et l'élément de protection et de support est muni de griffes destinées à être serties dans des encoches du codeur.

Dans un mode de réalisation de l'invention, le codeur est maintenu par un support annulaire intermédiaire surmoulé sur une face d'une partie axiale de l'élément de protection et de support, et muni d'une nervure circulaire de maintien, coopérant avec une gorge circulaire du codeur.

Avantageusement, le codeur est réalisé en matière chargée de particules magnétiques, par exemple un élastomère ou une matière plastique. Le codeur peut, également, être réalisé en ferrite.

L'invention a également pour objet un roulement équipé d'un dispositif de codeur pour la détection de la vitesse de rotation de sa bague tournante par rapport à sa bague non tournante, tel que décrit précédemment.

On obtient ainsi grâce à l'invention un codeur dont la structure est telle que la partie active constituée par l'anneau multipolaire est protégée efficacement et de façon étanche à l'intérieur d'un élément de protection et de support métallique amagnétique et maintenue coaxiale au roulement.

L'invention sera mieux comprise à l'étude de quelques modes de réalisation décrits à titre d'exemples nullement limitatifs et illustrés par les dessins annexés, sur lesquels :
la figure 1 est une vue en coupe axiale d'un moyeu de roue de véhicule équipé d'un palier à roulement avec un dispositif de codeur pour capteur de vitesse selon l'invention;
la figure 2 est une vue de détail du dispositif de codeur pour capteur de vitesse de la figure 1;
les figures 3, 4, 5 et 6 sont des variantes du dispositif de codeur pour capteur de vitesse de la figure 2;
la figure 7 est une vue de dessus de détail de la variante de la figure 4;
la figure 8 est une vue de détail en coupe axiale d'un dispositif de codeur pour capteur de vitesse selon un autre mode de réalisation de l'invention;
la figure 9 est une vue de détail en coupe axiale d'un dispositif de codeur pour capteur de vitesse selon un autre mode de réalisation de l'invention;
les figures 10, 11 et 12 sont des vues de détail en coupe axiale d'un dispositif de codeur pour capteur de vitesse selon d'autres modes de réalisation de l'invention où le codeur est disposé radialement par rapport au capteur;
la figure 13 est une vue de détail en coupe axiale d'un dispositif de codeur pour capteur de vitesse selon un autre mode de réalisation de l'invention;
la figure 14 est une vue en demi-coupe axiale d'un dispositif de codeur monté sur la bague extérieure tournante d'un palier à roulement;
la figure 15 est une vue de détail d'un mode de réalisation de l'invention où le codeur est monté sur le diamètre extérieur de la bague extérieure; et
la figure 16 est une vue de détail d'une variante de la figure 15.

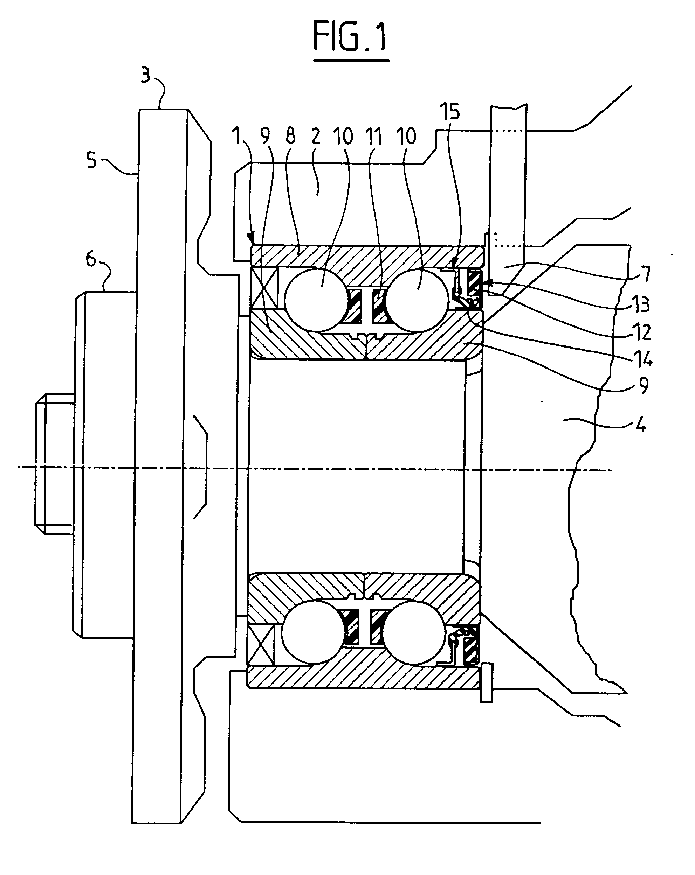

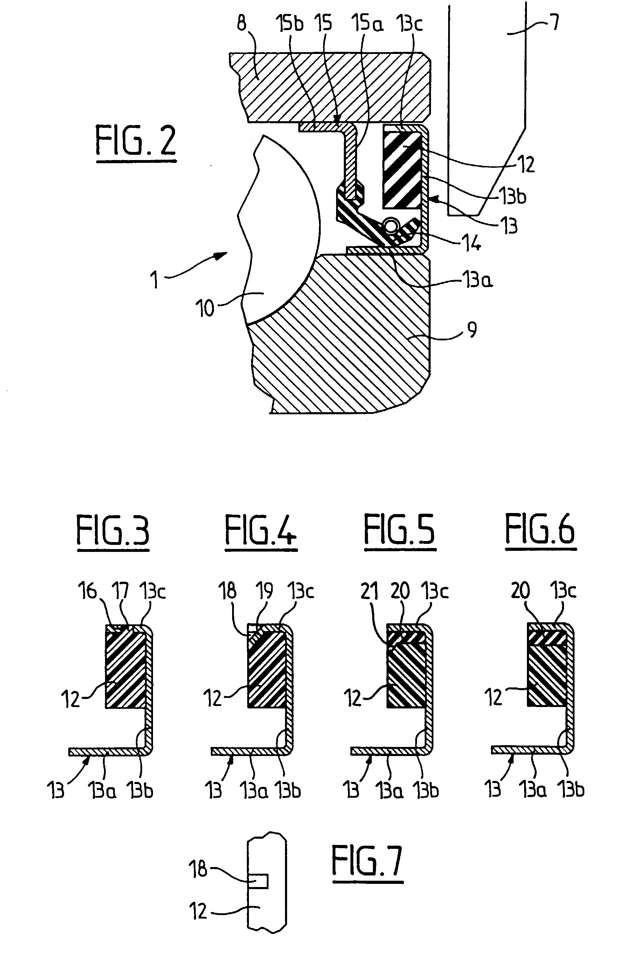

Comme illustré sur les figures 1 et 2, l'invention peut être appliquée à un palier à roulement 1 monté dans un moyeu de roue de véhicule automobile non illustrée sur la figure. Le palier 1 est monté dans un porte-fusée 2. La face interne du palier 1 est en contact avec le moyeu de roue 3 qui est entraîné en rotation par l'arbre d'entraînement 4. Le moyeu de roue 3 est muni de portées d'appui et de centrage 5,6 pour la roue. Un capteur 7 est monté de manière fixe par rapport au porte-fusée 2.

Le palier à roulement 1 comprend une bague extérieure 8 constituant l'organe non tournant du palier 1, deux demi-bagues intérieures 9 formant l'organe tournant du palier 1 assemblées côte-à-côte axialement et deux rangées de billes 10 réparties circonférentiellement entre la bague extérieure 8 et les demi-bagues intérieures 9 au moyen d'une cage 11. Le palier est équipé d'un codeur 12 disposé en regard axialement du capteur 7 et avec un faible écartement. Le codeur magnétique 12 est constitué d'un anneau multipolaire réalisé par exemple en matière plastique ou élastomère, chargé de particules magnétiques. Le codeur 12 est monté sur un élément de protection et de support 13 fixé sur la bague intérieure 9. Ainsi, le codeur 12, solidaire d'un élément tournant, constitue-t-il un rotor capable de produire une tension périodique de fréquence proportionnelle à la vitesse de rotation de la roue.

L'élément de protection et de support 13 est rigide et réalisé en métal amagnétique, par exemple un acier inoxydable austénitique ou un acier Z50M1B-4, et est de forme annulaire avec une partie axiale 13a emmanchée sur la bague intérieure 9 du palier 1, une partie radiale 13b disposée en regard du capteur 7 et en contact avec le codeur 12, et une deuxième partie axiale 13c également en contact avec le codeur 12.

Le palier 1 est muni du côté du codeur 12 d'un moyen d'étanchéité comprenant un joint d'étanchéité 14 souple en contact de frottement avec un élément tournant du palier, par exemple, avec l'élément de protection et de support 13 comme illustré sur les figures 1 et 2. Le joint d'étanchéité 14 est monté sur la bague non tournante 8 du palier 1 par l'intermédiaire d'un support 15. Le support 15 se compose d'une partie axiale 15a emmanchée sur la bague extérieure 8 et d'une partie radiale 15b s'étendant en direction de la bague intérieure 9 et supportant le joint d'étanchéité 14.

Tel qu'il est représenté en détail sur la figure 2, le codeur 12 et l'élément de protection et de support 13 sont entièrement logés dans un espace limité par les billes de roulement 10, l'alésage de la bague extérieure 8, le plan radial passant par l'extrémité axiale des bagues 8 et 9 du palier 1 et le diamètre extérieur de la bague intérieure 9. Dans le même espace est également logé le joint d'étanchéité 14 muni de son support 15. Le capteur 7 est fixé à une partie non tournante du dispositif, par exemple au porte-fusée 2, et s'étend radialement en direction de l'axe du palier, de façon à venir en regard du codeur 12.

La partie axiale 13a de l'élément de protection et de support 13 du codeur 12 présente un diamètre intérieur tel qu'elle puisse venir s'emmancher sur une portée de la bague intérieure 9. La partie radiale 13b prolonge la partie axiale 13a à son extrémité la plus proche du capteur 7. Le codeur 12 est fixé par tout moyen approprié, tel que collage, surmoulage ou autre, sur les faces internes des parties radiales 13b et axiales 13c de l'élément de protection et de support 13.

Le codeur 12 ainsi disposé est protégé efficacement par l'élément de protection et de support 13 qui forme un capot contre tous risques d'endommagement par chocs, rayures, pollution ou projections, sans que le champ magnétique émis par le codeur 12 soit altéré puisque l'élément de protection et de support 13 est réalisé en métal amagnétique. Un tel codeur 12 est en outre moins sensible aux particules métalliques qu'un codeur de l'art antérieur.

D'éventuelles particules métalliques, en provenance des disques de frein par exemple, sont en effet séparées de la partie magnétique du codeur 12 par l'épaisseur du support de protection amagnétique 13. La force d'attraction magnétique est donc moins forte et lesdites particules peuvent être plus facilement éliminées par centrifugation lors de la rotation du codeur 12. La partie radiale 13b de l'élément de protection et de support 13 affleure la surface frontale délimitant les bagues 8 et 9 du palier 1, de façon à être proche du capteur 7. Comme l'élément de protection et de support 13 est rigide, le codeur 12 est fermement assujetti à la bague intérieure 9 et ne peut pas se désaxer par rapport à celle-ci. On supprime ainsi les éventuels faux ronds de rotation qui se traduisent par des variations d'entrefer nuisibles à la fiabilité de la mesure de la vitesse de rotation.

Dans l'espace délimité par les billes de roulement 10 et le codeur 12 avec son élément de protection et de support 13, est logé le joint d'étanchéité 14 monté sur le support 15. Le joint d'étanchéité 14 est en contact de frottement avec la surface externe de la première partie axiale 13a de l'élément de protection et de support 13.

Sur les figures 3 à 7 illustrant des modes de réalisation particuliers montrant la fixation du codeur 12 dans l'élément de protection et de support 13, les éléments similaires portent les mêmes références.

Tel qu'il est représenté sur la figure 3, le codeur 12 est réalisé en matière plastique chargée de particules magnétiques et est monté sur un élément de protection et de support 13, l'ensemble codeur 12 et élément de protection et de support 13 étant monté dans un palier à roulement de manière identique à celle représentée sur la figure 2. L'élément de protection et de support 13 comprend une première partie axiale 13a destinée à être emmanchée sur la bague intérieure du palier, une partie radiale 13b en contact avec le codeur 12 et destinée à venir en regard du capteur, et une seconde partie axiale 13c s'étendant en retour vers l'intérieur du palier à roulement. La seconde partie axiale 13c de l'élément de protection et de support 13 est munie d'une pluralité de trous débouchants 16 destinés à être remplis par de la matière plastique du codeur 12 lors du surmoulage du codeur 12 sur l'élément de protection et de support 13. Ainsi, après le surmoulage, le codeur 12 comporte une pluralité d'excroissances locales 17 qui remplissent le volume des trous 16. De cette façon, le codeur 12 est solidement fixé à l'élément de protection et de support 13.

Sur les figures 4 et 7, le codeur 12 et l'élément de protection et de support 13 sont prévus pour être disposés dans un palier à roulement, d'une manière identique à celle représentée sur la figure 2. Le codeur 12 est muni, à son extrémité en contact avec la seconde partie axiale 13c de l'élément de protection et de support 13, d'une pluralité d'encoches 18 destinées à coopérer avec une pluralité de griffes 19 découpées dans l'extrémité libre de la seconde partie axiale 13c de l'élément de protection et de support 13 puis rabattues. Le codeur 12 est installé à son emplacement définitif en contact avec la partie radiale 13b et la seconde partie axiale 13c de l'élément de protection et de support 13, puis les griffes 19 sont rabattues dans les encoches 18, de façon à immobiliser le codeur 12.

Sur la figure 5, le codeur 12 et l'élément de protection et de support 13 sont prévus pour être installés dans un palier à roulement d'une façon identique à celle représentée sur la figure 2. L'élément de protection et de support 13 est également identique à celui représenté sur la figure 2. Le codeur 12, réalisé en matière plastique, vient se loger à l'intérieur d'un support annulaire intermédiaire 20 réalisé en élastomère et surmoulé sur la face interne de la seconde partie axiale 13c de l'élément de protection et de support 13. Le support intermédiaire 20 est muni d'une nervure circulaire 21 destinée à maintenir axialement le codeur 12 qui est muni d'une gorge circulaire coopérant avec la lèvre 21.

Sur la figure 6, le codeur 12 et l'élément de protection et de support 13 sont semblables à ceux de la figure 5, à ceci près, que le support 20 du codeur 12 ne comporte pas de nervure de maintien et a une section rectangulaire. Le support 20 est surmoulé sur la face interne de la seconde partie axiale 13c de l'élément de protection et de support 13, puis la partie réalisée en matière plastique du codeur 12 est emmanchée sur le support 20.

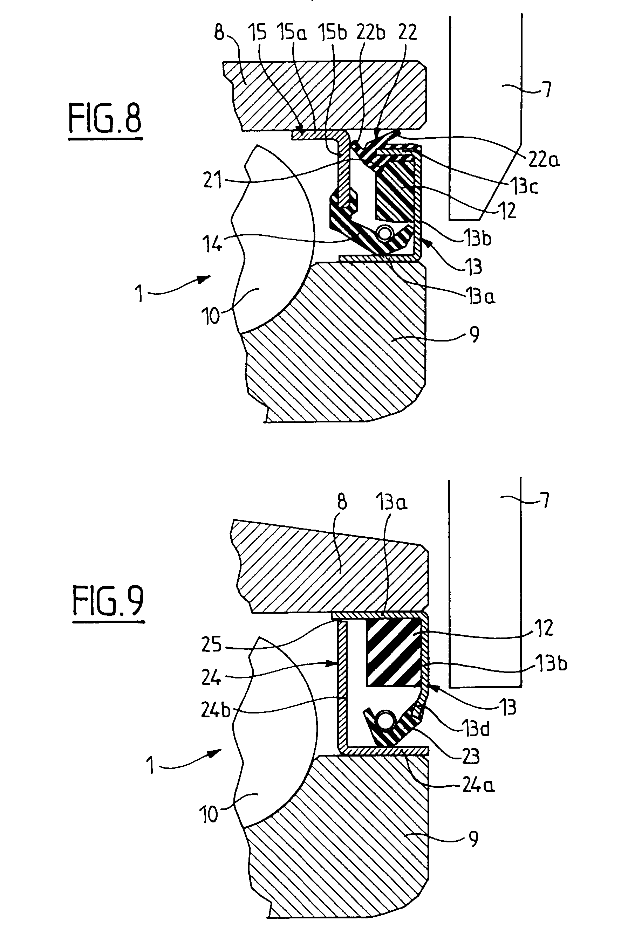

Les figures 8 et 9 illustrent deux variantes.

Les éléments similaires à ceux de la variante illustrée sur les figures 1 et 2 portent les mêmes références.

Tel qu'il est représenté sur la figure 8, le palier 1 est muni d'une bague extérieure 8 non tournante, d'une bague intérieure 9 tournante, de billes de roulement 10, d'un codeur 12 magnétique monté sur un élément de protection et de support 13 et d'un joint d'étanchéité 14 monté sur un support 15. Un capteur 7, solidaire d'un élément fixe par rapport à la bague extérieure, est disposé axialement en regard et à faible distance du codeur 12. L'élément de protection et de support 13 comprend une première partie axiale 13a emmanchée sur la bague intérieure 9, une partie radiale 13b s'étendant en direction de la bague extérieure 8 et une seconde partie axiale 13c s'étendant en retour vers l'intérieur du palier 1. Le joint d'étanchéité 14 coopère avec la face externe de la première partie axiale 13a de l'élément de protection et de support 13 et est monté sur un support 15 emmanché sur la bague extérieure 8 par une partie axiale 15a, et muni d'une partie radiale 15b supportant le joint d'étanchéité 14.

Le codeur 12 est logé radialement dans un support annulaire intermédiaire 22 en matériau synthétique souple surmoulé sur la seconde partie axiale 13c de l'élément de protection et de support 13. Le support intermédiaire 22 est muni d'une nervure circulaire de maintien 21 et fait office de second joint d'étanchéité grâce à deux lèvres 22a,22b. La première lèvre 22a est en contact de frottement avec l'alésage de la bague extérieure 8, et la seconde lèvre 22b est en contact de frottement avec la surface frontale extérieure de la partie radiale 15b du support 15 du joint d'étanchéité 14. Ainsi monté, le codeur 12 est complètement protégé des éléments extérieurs risquant de le détériorer puisqu'il est enfermé dans l'espace délimité par les bagues extérieure 8 et intérieure 9 du palier 1, l'élément de protection et de support 13, le support 22, le joint d'étanchéité 14 et le support 15.

Tel qu'il est représenté sur la figure 9, le palier 1 est muni d'une bague extérieure 8 constituant l'organe tournant du palier 1, d'une bague intérieure 9 constituant l'organe non tournant du palier 1, de billes de roulement 10, d'un codeur 12 monté sur un élément de protection et de support 13, d'un joint d'étanchéité 23 et d'un élément de protection supplémentaire 24. Un capteur 7, solidaire d'un élément fixe par rapport à l'organe non tournant du palier 1, est disposé en regard et à faible distance du codeur 12. L'élément de protection et de support 13 comprend une partie axiale 13a emmanchée dans l'alésage de la bague extérieure tournante 8, une partie radiale 13b disposée entre le codeur 12 et le capteur 7 et affleurant la surface frontale extérieure du palier 1 et se prolongeant par une partie oblique 13d s'étendant en direction de la bague intérieure non tournante 9. La partie oblique 13d de l'élément de protection et de support 13 supporte un joint d'étanchéité 23 en contact de frottement avec l'élément de protection supplémentaire 24.

L'élément de protection supplémentaire 24 comprend une partie axiale 24a emmanchée sur la bague intérieure 9 non tournante et en contact avec le joint d'étanchéité 23 supporté par l'élément de protection 13, et une partie radiale 24b prolongeant la partie axiale 24a à son extrémité située à proximité des billes 10. La partie radiale 24b de l'élément de protection supplémentaire 24 s'étend en direction de la bague extérieure 8 tournante et coopère avec la partie axiale 13a de l'élément de protection et de support 13, de façon à former un passage étroit 25 jouant le rôle d'un joint à labyrinthe. Le codeur 12 est donc enfermé dans l'espace délimité par les bagues extérieure 8 et intérieure 9 du palier 1, l'élément de protection 13, le joint d'étanchéité 23, l'élément de protection supplémentaire 24 et le joint à labyrinthe formé par le passage étroit 25. Le codeur 12 est ainsi protégé des agressions extérieures.

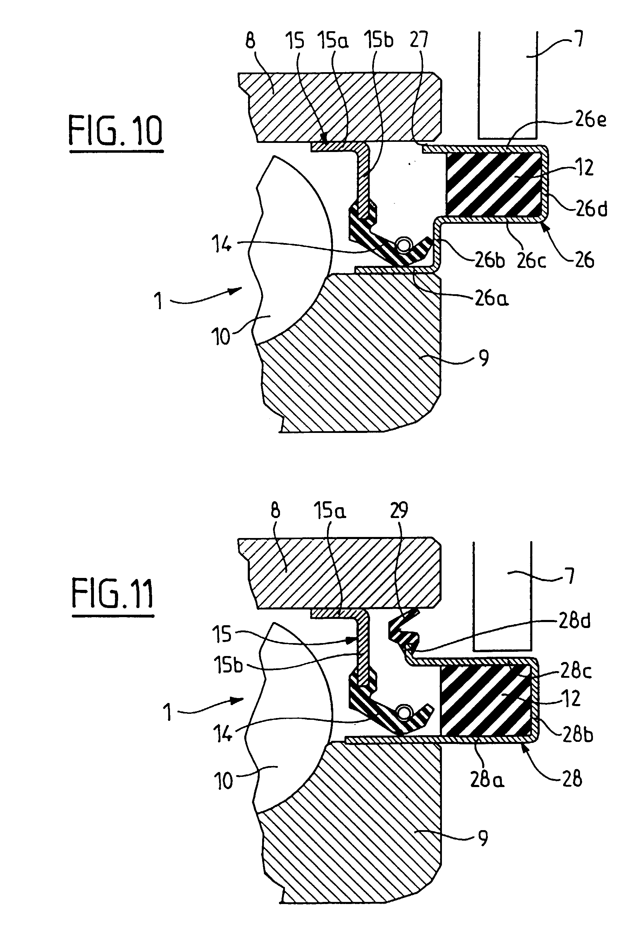

Les figures 10 à 12 illustrent une autre variante dans laquelle le codeur est disposé à l'extérieur du palier à roulement et le capteur agit radialement.

Les éléments similaires aux variantes précédentes portent les mêmes références.

Tel qu'il est représenté sur la figure 10, le palier 1 comprend une bague extérieure 8 non tournante, une bague intérieure 9 tournante, des billes de roulement 10, un codeur 12 protégé par un élément de protection et de support 26 et un joint d'étanchéité 14 monté sur un support 15. Un capteur 7 solidaire d'un élément fixe par rapport à la bague non tournante du palier 1, est disposé cette fois radialement par rapport au codeur, toujours à faible distance de celui-ci. Le codeur 12 est entouré sur trois côtés par l'élément de protection et de support 26 et fait saillie par rapport à la surface frontale externe du palier à roulement 1. Le joint d'étanchéité 14 est supporté par un support 15 solidaire de la bague extérieure 8 non tournante du palier 1 et est en contact de frottement avec une face extérieure d'une première partie axiale 26a de l'élément de protection et de support 26. La première partie axiale 26a de l'élément de protection et de support 26 est emmanchée sur la bague intérieure 9 tournante.

L'élément de protection et de support 26 comprend, de plus, une première partie radiale 26b prolongeant la première partie axiale 26a à son extrémité extérieure au palier 1 et s'étendant en direction de la bague extérieure 8 du palier 1, une seconde partie axiale 26c prolongeant la première partie radiale 26b à son extrémité opposée à la première partie axiale 26a, en contact avec le codeur 12 et s'étendant à l'opposé du palier 1, une deuxième partie radiale 26d prolongeant la seconde partie axiale 26c à son extrémité opposée à la première partie radiale 26b, en contact avec le codeur 12 et s'étendant en direction de la bague extérieure 8, et une troisième partie axiale 26e prolongeant la seconde partie radiale 26d à son extrémité opposée à la seconde partie axiale 26c, en contact avec le codeur 12 et s'étendant en direction de la bague extérieure 8, de façon à former avec ladite bague extérieure 8 un passage étroit 27. Le capteur 7 est situé en regard de la face externe du codeur 12, c'est-à-dire à proximité de la face externe de la troisième partie axiale 26e de l'élément de protection et de support 26.

Le codeur 12 se trouve donc enserré sur trois côtés par les parties 26c,26d et 26e et ainsi parfaitement protégé par l'élément de protection et de support 26. De plus, le passage étroit joue le rôle d'un joint labyrinthe et empêche ainsi l'entrée d'eau, de boue ou de tout autre élément étranger au contact du codeur 12.

Tel qu'il est représenté sur la figure 11, le palier 1 comprend une bague extérieure 8 non tournante, une bague intérieure 9 tournante, des billes de roulement 10, un codeur 12 protégé par un élément de protection et de support 28 et un joint d'étanchéité 14 monté sur un support 15. Un capteur 7 est disposé radialement par rapport au codeur 12 qui fait saillie par rapport au palier à roulement 1. Le joint d'étanchéité 14 et son support 15 sont identiques à ceux représentés sur la figure 10.

L'élément de protection et de support 28 comprend une première partie axiale 28a emmanchée sur la bague intérieure 9 tournante, en contact avec le codeur 12 et faisant saillie par rapport au palier 1, une partie radiale 28b prolongeant la première partie axiale 28a à son extrémité extérieure au palier 1, en contact avec le codeur 12 et s'étendant en direction de la bague extérieure 8, une deuxième partie axiale 28c prolongeant la partie radiale 28b à son extrémité opposée à la première partie axiale 28a, en contact avec le codeur 12 et s'étendant en direction de l'intérieur du palier 1, et une partie d'extrémité 28d s'étendant en direction de la bague extérieure 8 non tournante, et muni d'un joint d'étanchéité 29 en contact de frottement avec une portée de la bague extérieure 8 non tournante. Le capteur 7 est disposé radialement par rapport au codeur 12 et est situé à proximité de la face externe de la seconde partie axiale 28c de l'élément de protection et de support 28.

Le codeur 12 est donc, comme dans le mode de réalisation de la figure 10, enserré sur trois côtés par l'élément de protection et de support 28 et parfaitement protégé. De plus, le joint 29 assure une étanchéité complète de l'espace dans lequel est logé le codeur, délimité par l'élément de protection et de support 28, le joint d'étanchéité 14, le support 15, la bague extérieure 8 et le joint 29. Les billes 10 du palier 1 sont également protégées de l'extérieur par le joint 14 et par le joint 29.

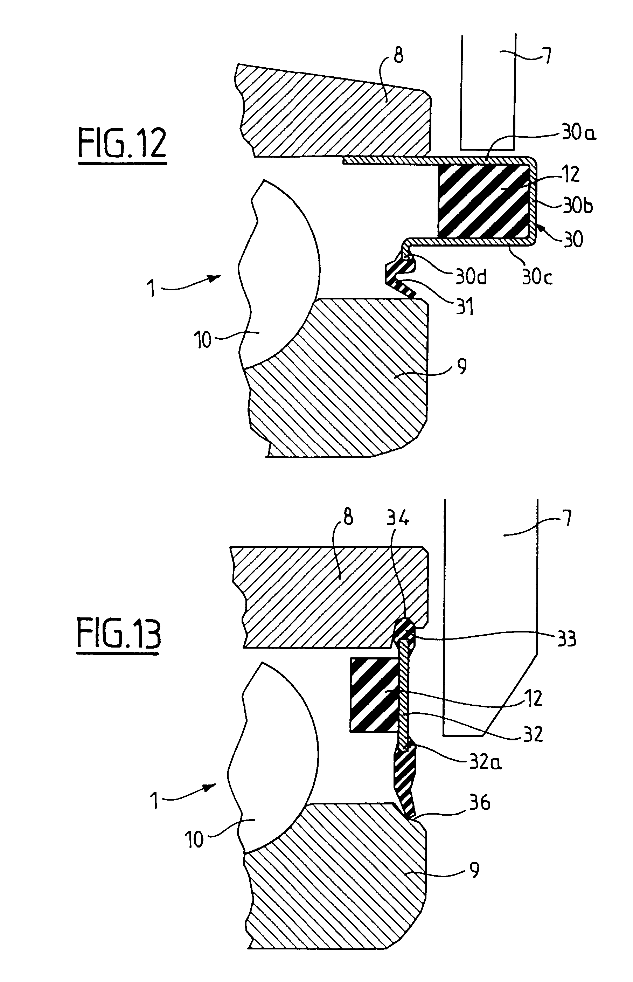

Tel qu'il est représenté sur la figure 12, le palier 1 comprend une bague extérieure 8 tournante, une bague intérieure 9 non tournante, des billes de roulement 10 et un codeur 12 avec son élément de protection et de support 30. Le codeur 12 fait saillie axialement par rapport au palier 1 et le capteur 7 solidaire d'un élément fixe par rapport à la bague non tournante du palier 1, est disposé radialement en regard dudit codeur 12.

L'élément de protection et de support 30 comprend une première partie axiale 30a emmanchée sur la bague extérieure 8 tournante, en contact avec le codeur 12 et faisant saillie par rapport au palier 1, une partie radiale 30b prolongeant la première partie axiale 30a à son extrémité extérieure au palier 1, en contact avec le codeur 12 et s'étendant en direction de la bague intérieure 9, une seconde partie axiale 30c prolongeant la partie radiale 30b à son extrémité opposée à la première partie axiale 30a, en contact avec le codeur 12 et s'étendant vers l'intérieur du palier 1, et une partie d'extrémité 30d s'étendant en direction de la bague intérieure 9 non tournante.

Un joint d'étanchéité à lèvres 31 est surmoulé sur la partie d'extrémité 30d de l'élément de protection et de support 30 et est en contact de frottement avec une portée de la bague intérieure 9 non tournante. Le capteur 7 est disposé radialement en regard d'une surface externe de la première partie axiale 30a de l'élément de protection et de support 30.

Le codeur 12 est ainsi parfaitement protégé contre les agressions extérieures par les parties 30a, 30b et 30c de l'élément de protection et de support 30 qui l'enserrent sur trois côtés. Le quatrième côté du codeur 12 est ouvert en direction de l'intérieur du palier 1, le joint 31 empêchant toute intrusion d'éléments étrangers au palier 1. Cette variante est particulièrement économique, car l'élément de protection et de support 30 a une double fonction de protection et de support du codeur 12 et de support du joint 31.

La figure 13 illustre encore une autre variante de l'invention, dans laquelle le codeur est disposé à l'intérieur du palier à roulement et le capteur agit axialement. Les éléments similaires aux variantes précédentes portent les mêmes références.

Tel qu'il est représenté sur la figure 13, le palier 1 comprend une bague extérieure 8 tournante, une bague intérieure 9 non tournante, des billes de roulement 10 et un codeur 12 monté sur un élément de protection et de support 32. L'élément de protection et de support 32 se compose d'une plaque annulaire radiale dont la face dirigée vers l'intérieur du palier 1 porte le codeur 12 et dont la face dirigée vers l'extérieur du palier 1 est située axialement en regard et à faible distance du capteur 7. L'élément de protection et de support 32 est fixé sur la bague extérieure 8 tournante du palier 1 par l'intermédiaire d'un cordon annulaire périphérique 33 en élastomère surmoulé sur ledit élément de protection et de support 32 et coopérant avec une gorge 34 pratiquée dans l'alésage de la bague extérieure 8.

L'étanchéité du palier 1 est assurée par un joint d'étanchéité 35 surmoulé sur le périmètre intérieur de l'élément de protection et de support 32 et en contact de frottement avec une portée 36 oblique de la bague intérieure non tournante 9 du palier 1. Le codeur 12 est fixé sur la face interne de l'élément de protection et de support 32, axialement en regard du capteur 7. Le codeur 12 et l'élément de protection et de support 32 sont entièrement logés à l'intérieur du palier 1 et ne dépassent pas de la surface radiale externe du palier 1.

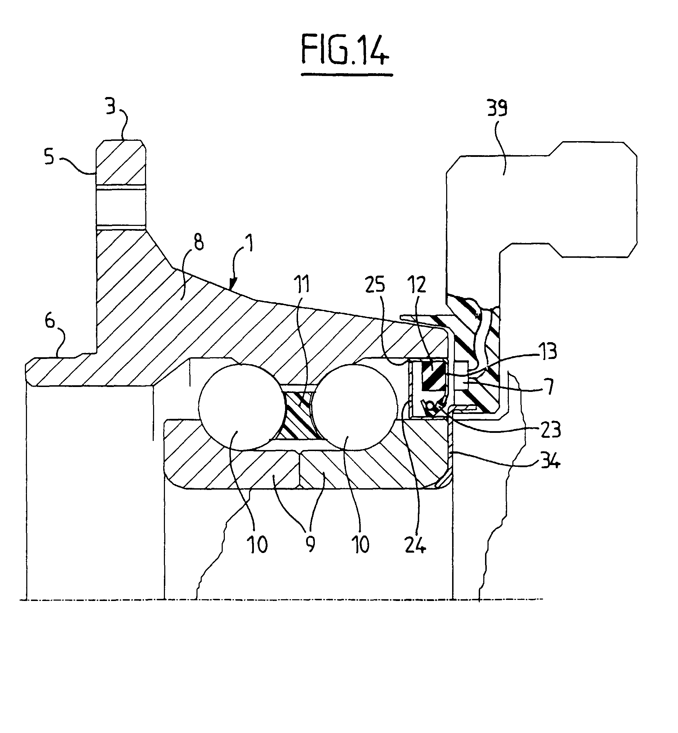

Sur les figures 14 à 16, les éléments similaires aux variantes précédentes portent les mêmes références.

Sur la figure 14, le palier à roulement 1 comprend une bague extérieure tournante 8 et deux bagues intérieures non tournantes 9. La bague extérieure 8 fait office de moyeu de roue 3 et est donc destinée à supporter une roue et, en général, un disque de frein non représentés. Le codeur 12, l'élément de protection et de support 13, le joint d'étanchéité 23 et l'élément de protection supplémentaire 24, sont identiques à ceux représentés sur la figure 9. Le capteur 7 est solidaire d'un connecteur 39 destiné à le relier à des moyens de traitement, non représentés, des signaux émis par le capteur 7. Celui-ci est monté sur un support de montage 34 solidaire d'une demi-bague intérieure 9.

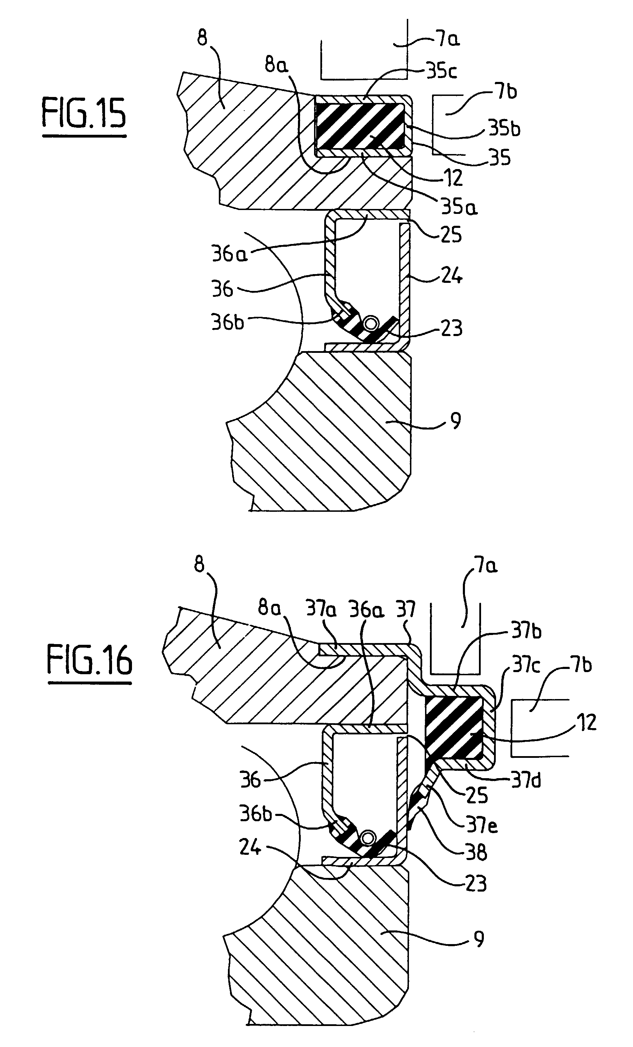

Sur la figure 15, la bague extérieure 8 est pourvue sur son diamètre extérieur d'une portée cylindrique 8a de montage de l'élément de protection et de support 35. L'élément de protection et de support 35 est annulaire, et comprend en section, une branche intérieure cylindrique 35a montée sur la portée 8a de la bague extérieure 8, une partie radiale 35b et une branche extérieure cylindrique 35c. Le codeur 12 est monté entre les branches intérieure 35a et extérieure 35c de l'élément de protection et de support 35. L'extrémité libre de la branche extérieure 35c vient au contact de la bague extérieure 8. Ainsi, le codeur 12 est entièrement isolé du milieu extérieur, dans l'espace défini par l'élément de protection et de support 35 et la bague extérieure 8. Ce mode de réalisation autorise deux positions de montage possibles 7a, 7b du capteur par rapport au codeur 12. En position 7a, le capteur est radialement en regard du codeur 12. Au contraire, en position 7b, le capteur est axialement en regard du codeur 12.

Un joint d'étanchéité 23 est disposé entre les bagues extérieure 8 et intérieure 9. Le joint d'étanchéité 23 est surmoulé sur l'extrémité libre 36b d'un capot de support 36 dont l'autre extrémité libre 36a forme une partie cylindrique emmanchée sur un alésage de la bague tournante 8. Le joint d'étanchéité 23 est en contact de frottement sur une portée d'un élément de protection supplémentaire 24 qui forme avec l'extrémité libre 36a du capot de support 36 un passage étroit 25.

Sur la figure 16, les moyens d'étanchéité sont identiques à ceux de la figure précédente. L'élément de protection et de support 37 comprend une partie cylindrique 37a emmanchée sur la portée de montage 8a de la bague tournante 8. L'élément de protection et de support 37 comprend également une branche extérieure cylindrique 37b, une partie radiale 37c et une branche intérieure cylindrique 37d qui forment un espace annulaire fermé sur trois côtés et dans lequel est disposé le codeur 12. La branche intérieure cylindrique 37d se prolonge, en direction du palier à roulement, par une extrémité libre 37e sur laquelle est surmoulé un joint d'étanchéité supplémentaire 38 en contact de frottement avec l'élément de protection supplémentaire 24. Ainsi, le codeur est entièrement protégé à l'intérieur de l'espace défini par la branche extérieure cylindrique 37b, la partie radiale 37c, la branche intérieure cylindrique 37d de l'élément de protection et de support 37, le joint d'étanchéité supplémentaire 38, l'élément de protection supplémentaire 24 et la bague extérieure 8. Comme sur la figure 15, le capteur peut être monté dans deux positions 7a et 7b par rapport au codeur 12. En position 7a, le capteur est radialement en regard du codeur 12 et en position 7b, le capteur est axialement en regard du codeur 12.

Grâce à l'invention, et quelle que soit la variante de réalisation, le codeur de l'ensemble capteur de vitesse de rotation est entièrement protégé contre les agressions d'éléments extérieurs, tels que eau, sable ou poussières. De plus, le codeur est également protégé contre les chocs pouvant survenir lors des manipulations avant ou pendant le montage du palier sur les organes mécaniques avec lesquels il vient en contact. La fiabilité de la mesure de la vitesse s'en trouve donc accrue.

## Revendications

1. Dispositif de codeur pour capteur de vitesse de rotation d'un organe tournant d'un palier (1) monté sur un organe non tournant dudit palier (1), du type comprenant un capteur (7) solidaire d'un élément fixe par rapport à l'organe non tournant et devant lequel défile en rotation et avec un faible entrefer un élément formant rotor muni d'un codeur (12) capable de produire dans le capteur (7) un signal périodique de fréquence proportionnelle à la vitesse de rotation de l'élément rotor, caractérisé par le fait que le codeur (12), sous forme d'un anneau aimanté multipolaire, est fixé sur une face interne d'un élément de protection et de support (13) rigide et réalisé en matériau métallique amagnétique, une face externe correspondante dudit élément de protection (13) défilant en rotation devant ledit capteur (12).

2. Dispositif de codeur selon la revendication 1, caractérisé en ce que l'élément de protection et de support (13) comprend au moins une partie radiale en contact avec le codeur.

3. Dispositif de codeur selon la revendication 2, caractérisé en ce que le capteur (7) est disposé axialement par rapport au codeur (12) et le codeur (12) avec l'élément de protection et de support (13) est entièrement logé à l'intérieur du palier.

4. Dispositif de codeur selon la revendication 2 ou 3, caractérisé en ce que l'élément de protection et de support (13) comprend une première partie axiale (13a) emmanchée sur l'organe tournant du palier (1), une partie radiale (13b) en contact avec le codeur (12) et une deuxième partie axiale (13c) en contact avec le codeur.

5. Dispositif de codeur selon la revendication 2 ou 3, caractérisé en ce que l'élément de protection et de support (13) comprend une partie axiale (13a) emmanchée sur l'organe tournant du palier (1) et en contact avec le codeur (12), une partie radiale (13b) en contact avec le codeur (12) et une partie oblique (13d) s'étendant en direction de l'organe non tournant du palier (1).

6. Dispositif de codeur selon la revendication 1, caractérisé en ce que l'élément de protection et de support (26,28,30) comprend au moins une partie axiale en contact avec le codeur (12).

7. Dispositif de codeur selon la revendication 6, caractérisé en ce que l'élément de protection et de support (35) est emmanché sur le diamètre extérieur de l'organe tournant du palier.

8. Dispositif de codeur selon la revendication 6 ou 7, caractérisé en ce que le capteur (7) est disposé radialement par rapport au codeur (12) et le codeur (12) fait saillie par rapport au palier (1).

9. Dispositif de codeur selon la revendication 6, 7 ou 8, caractérisé en ce que le codeur (12) est entouré sur trois côtés par l'élément de protection et de support (26,28,30).

10. Dispositif de codeur selon l'une quelconque des revendications précédentes, caractérisé en ce que le palier (1) est muni d'un moyen d'étanchéité comprenant un joint souple (14) coopérant avec ledit élément de protection et de support (13).

11. Dispositif de codeur selon l'une quelconque des revendications précédentes, caractérisé en ce qu'une lèvre d'un joint d'étanchéité (14) du palier (1) est en contact avec une partie axiale (13a) de l'élément de protection et de support (13) emmanchée sur l'organe tournant du palier (1).

12. Dispositif de codeur selon l'une quelconque des revendications précédentes, caractérisé en ce qu'une partie (28d,30d) de l'élément de protection et de support (28,30) située à proximité de l'organe non tournant du palier (1) est munie d'un joint d'étanchéité (29,31) à lèvres en contact avec ledit organe non tournant du palier (1).

13. Dispositif de codeur selon l'une quelconque des revendications 1 à 11, caractérisé en ce qu'une partie de l'élément de protection et de support (13) située à proximité de l'organe non tournant du palier (1) est munie d'un joint d'étanchéité à lèvres en contact avec un support (15) d'un joint d'étanchéité (14) du palier solidaire de l'organe non tournant du palier (1).

14. Dispositif de codeur selon l'une quelconque des revendications précédentes, caractérisé par un élément de protection supplémentaire (24) comprenant une partie axiale (24a) emmanchée sur l'organe non tournant du palier (1), en contact avec une lèvre d'un joint d'étanchéité (23) fixé sur l'élément de protection et de support (13) et une partie radiale (24b) s'étendant en direction de l'organe tournant du palier (1) de façon à former un passage étroit (25) avec ledit organe tournant du palier (1).

15. Dispositif de codeur selon l'une quelconque des revendications 1 à 10, caractérisé en ce que l'élément de protection et de support (13,26) comprend une partie coopérant avec l'organe non tournant du palier (1) pour former un passage étroit.

16. Dispositif de codeur selon l'une quelconque des revendications précédentes, caractérisé en ce que le codeur (12) est surmoulé sur l'élément de protection et de support.

17. Dispositif de codeur selon la revendication 15, caractérisé en ce que l'élément de protection et de support (13) est muni de déformations ou d'enlèvements de matière localisés (16) servant d'ancrage au codeur (12).

18. Dispositif de codeur selon l'une quelconque des revendications 6 à 9, caractérisé en ce que le codeur (12) est introduit à force dans l'élément de protection et de support (13) et ledit élément de protection et de support est muni de griffes (19) destinées à être serties dans des encoches (18) du codeur.

19. Dispositif de codeur selon l'une quelconque des revendications précédentes, caractérisé en ce que le codeur (12) est maintenu par un support annulaire intermédiaire (20), surmoulé sur une face d'une partie axiale de l'élément de protection et de support (13), ledit support annulaire intermédiaire étant en outre muni d'une nervure (21) circulaire de maintien, coopérant avec une gorge circulaire du codeur.

20. Dispositif de codeur selon l'une quelconque des revendications précédentes, caractérisé en ce que le codeur (12) est réalisé en matière chargée de particules magnétiques.

21. Roulement équipé d'un codeur pour dispositif de détection de la vitesse de rotation de sa bague tournante par rapport à sa bague non tournante selon l'une quelconque des revendications précédentes.

## Patentansprüche

1. Impulserzeuger für einen Drehzahlgeber eines umlaufenden Teiles eines Lagers (1), das auf einem stillstehenden Teil des Lagers (1) gelagert ist, mit einem Aufnehmer (7), der an einem Element befestigt ist, das bezüglich des stillstehenden Teils fest ist und vor dem drehend und mit einem geringen Spalt ein einen Rotor bildendes Element vorbeiläuft, das mit einem Impulserzeuger (12) versehen ist, der in der Lage ist, in dem Aufnehmer (7) ein periodische Signal zu erzeugen, dessen Frequenz der Drehzahl des Rotorelementes proportional ist, dadurch gekennzeichnet, dass der Impulserzeuger (12), der die Gestalt eines mehrpolig magnetisierten Ringes aufweist, auf einer Innenfläche eines Schutz- und Trägerteils (13) befestigt ist, das starr ist und aus einem nichtmagnetischen Material besteht, wobei eine entsprechende Außenfläche des zugehörigen Schutzelementes (13) drehend vor dem Aufnehmer (12) vorbeiläuft.

2. Impulserzeugungseinrichtung nach Anspruch 1, dadurch gekennzeichnet, dass das Schutz- und Trägerelement (13) wenigstens einen radialen Abschnitt aufweist, der mit dem Impulserzeuger (12) in Berührung steht.

3. Impulserzeugereinrichtung nach Anspruch 2, dadurch gekennzeichnet, dass der Aufnehmer (7) gegenüber dem Impulserzeuger (12) axial angeordnet ist und dass der Impulserzeuger (12) zusammen mit dem Schutz- und Trägerelement (13) vollständig im inneren des Lagers untergebracht ist.

4. Impulserzeugereinrichtung nach den Ansprüchen 2 oder 3, dadurch gekennzeichnet, dass das Schutz- und Trägerelement (13), einen ersten axialen Abschnitt (13a), der auf das umlaufende Teil des Lagers (1) aufgepresst ist, sowie einen radialen Abschnitt (13b), der mit dem Impulserzeuger (12) in Berührung steht, und einen zweiten axialen Abschnitt (13c) aufweist, der mit in dem Impulserzeuger in Berührung steht.

5. Impulserzeugereinrichtungen nach den Ansprüchen 2 oder 3, dadurch gekennzeichnet, dass das Schutz- und Trägerelement (13) einen axialen Abschnitt (13a), der auf das umlaufende Teil das Lagers (1) aufgepresst ist und mit dem Impulserzeuger (12) in Berührung steht, sowie einen radialen Abschnitt (13b), der mit dem Impulserzeuger (13) in Berührung steht, und einen schrägen Abschnitt (13d) aufweist, der sich in Richtung auf den stillstehenden Teil des Lagers erstreckt.

6. Impulserzeugereinrichtungen nach Anspruch 1, dadurch gekennzeichnet, dass das Schutz- und Trägerelement (26,28,30) wenigstens einen axialen Abschnitt aufweist, der mit dem Impulserzeuger (12) in Berührung steht.

7. Impulserzeugereinrichtungen nach Anspruch 6, dadurch gekennzeichnet, dass das Schutz- und Trägerelement (35) auf die Außenumfangsfläche des umlaufenden Teils des Lagers aufgepresst ist.

8. Impulserzeugereinrichtungen nach den Ansprüchen 6 oder 7, dadurch gekennzeichnet, dass der Aufnehmer (7) radial bezüglich des Impulserzeugers (12) angeordnet ist und dass der Impulserzeuger (12) gegenüber dem Lager (1) vorspringt.

9. Impulserzeugereinrichtung nach den Ansprüchen 6, 7 oder 8, dadurch gekennzeichnet, dass der Impulserzeuger (12) an drei Seiten von dem Schutz- und Trägerelement (26, 28, 30) umgeben ist.

10. Impulserzeugereinrichtungen nach einem der vorhergehenden Ansprüchen dadurch gekennzeichnet, dass das Lager (1) mit einer Dichteinrichtung versehen ist, zu der eine weiche Dichtfläche (14) gehört, die mit dem Schutzund Trägerelement (13) zusammenwirkt.

11. Impulserzeugereinrichtungen nach einem der vorhergehenden Ansprüchen, dadurch gekennzeichnet, dass eine Lippe einer Dichtanordnung (14) des Lagers (1) mit einem axialen Abschnitt (13a) des Schutz- und Trägerelementes (13) in Berührung steht, das auf den umlaufenden Teil des Lagers (1) aufgepresst ist.

12. Impulserzeugereinrichtungen nach einem der vorhergehenden Ansprüchen, dadurch gekennzeichnet, dass ein Abschnitt (28d,30d) des Schutz- und Trägerelementes (28, 30), der sich in der Nähe des stillstehenden Teils des Lagers (1) befindet, mit einer Lippendichtungsanordnung (29, 31) versehen ist, die mit dem stillstehenden Teil des Lagers (1) in Berührung steht.

13. Impulserzeuger nach einem der Ansprüche 1 bis 11, dadurch gekennzeichnet, dass ein Abschnitt des Schutz- und Trägerelementes (13), der sich in der Nähe des stillstehenden Teils des Lager (1) befindet, mit einer Lippendichtungsanordnung versehen ist, die mit einem Träger (15) einer Dichtanordnung (14) des Lagers in Berührung steht, der an dem stillstehenden Teils des Lagers (1) befestigt ist.

14. Impulserzeugereinrichtungen nach einem der vorhergehenden Ansprüche, dadurch gekennzeichnet, dass ein zusätzliches Schutzelement (24) einen axialen Abschnitt (24a), der auf den stillstehenden Teil des Lagers aufgepresst ist und mit einer Dichtlippe (23) in Berührung steht, die an dem Schutz- und Trägerelement (13) befestigt ist, sowie einen radialen Abschnitt (24b)aufweist, der sich zu dem umlaufenden Teil des Lagers (1) hin erstreckt, in der Weise, dass mit dem umlaufenden Teil des Lagers (1) ein enger Durchgang (25) gebildet ist.

15. Impulserzeugereinrichtung nach einem der Ansprüche 1 bis 10, dadurch gekennzeichnet, dass das Schutz- und Trägerelement (13, 26) einen Abschnitt aufweist, der mit dem stillstehenden Teil des Lagers (1) zusammenwirkt, um einen engen Spalt zu bilden.

16. Impulserzeugereinrichtung nach einem der vorhergehenden Ansprüchen, daher gekennzeichnet, dass der Impulserzeuger (12) in bzw. auf das Schutz- und Trägerelement ein- bzw aufgespritzt ist.

17. Impulserzeugereinrichtung nach Anspruch 15, dadurch gekennzeichnet, dass das Schutz- und Trägerelement (13) mit lokalen Gestaltsänderungen oder Erhöhungen (16) versehen ist, die als Verankerung für den Impulserzeuger (12) dienen.

18. Impulserzeuger nach einem der Ansprüche 6 bis 9, dadurch gekennzeichnet, dass der Impulserzeuger (12) mit Presssitz in das Schutz- und Trägerelement (13) eingesetzt ist und dass das Schutz- und Trägerelement (13) mit Krallen (19) versehen ist, die dazu vorgesehen sind, in Ausnehmungen (18) des Impulserzeugers einzugreifen.

19. Impulserzeugereinrichtung nach einem der vorhergehenden Ansprüche, dadurch gekennzeichnet, dass der Impulserzeuger (12) mittels eines Trägerzwischenrings (20) gehalten ist, der auf eine Fläche eines axialen Abschnittes des Schutz- und Trägerelementes (13) aufgespritzt ist, wobei der Trägerzwischenring, unter anderem mit ringförmigen Halterrippen (21) versehen ist, die mit einer ringförmigen Halterrippe versehen ist, die mit einer Ringnut oder Ausnehmung des Impulserzeugers zusammenwirkt.

20. Impulserzeugereinrichtungen, nach einem der vorhergehenden Ansprüche, dadurch gekennzeichnet, dass der Impulserzeuger (12) aus einem Material hergestellt ist, das magnetischen Partikeln gefüllt ist.

21. Lager das mit einem Ipulsgeber für einen Drehzahlsensor seines umlaufenden Rings bezüglich seines stillstehenden Rings versehen ist, wobei der Impulserzeuger nach einem der vorhergehenden Ansprüche ausgeführt ist.

## Claims

1. Encoder device for a rotational speed sensor of a rotating member of a bearing (1) mounted on a non-rotating member of the said bearing (1), of the type comprising a sensor (7) which is secured to an element that is fixed relative to the non-rotating member and in front of which an element forming a rotor moves in rotation with a small air gap, which element is equipped with an encoder (12) capable of producing in the sensor (7) a periodic signal of frequency proportional to the speed of rotation of the rotor element, characterized in that the encoder (12), in the form of a multipole magnetized ring, is fixed on an internal face of a rigid protection and support element (13) made of nonmagnetic metallic material, a corresponding external face of the said protection element (13) moving in rotation in front of the said sensor (7).

2. Encoder device according to Claim 1, characterized in that the protection and support element (13) comprises at least one radial part in contact with the encoder.

3. Encoder device according to Claim 2, characterized in that the sensor (7) is arranged axially relative to the encoder (12) and the encoder (12), with the protection and support element (13), is entirely housed inside the bearing.

4. Encoder device according to Claim 2 or 3, characterized in that the protection and support element (13) comprises a first axial part (13a), fitted over the rotating member of the bearing (1), a radial part (13b) in contact with the encoder (12) and a second axial part (13c) in contact with the encoder.

5. Encoder device according to Claim 2 or 3, characterized in that the protection and support element (13) comprises an axial part (13a), fitted over the rotating member of the bearing (1) and in contact with the encoder (12), a radial part (13b) in contact with the encoder (12) and an oblique part (13d) extending towards the non-rotating member of the bearing (1).

6. Encoder device according to Claim 1, characterized in that the protection and support element (26, 28, 30) comprises at least one axial part in contact with the encoder (12).

7. Encoder device according to Claim 6, characterized in that the protection and support element (35) is fitted over the external diameter of the rotating member of the bearing.

8. Encoder device according to Claim 6 or 7, characterized in that the sensor (7) is arranged radially relative to the encoder (12) and the encoder (12) projects relative to the bearing (1).

9. Encoder device according to Claim 6, 7 or 8, characterized in that the encoder (12) is surrounded on three sides by the protection and support element (26, 28, 30).

10. Encoder device according to any one of the preceding claims, characterized in that the bearing (1) is equipped with a sealing means comprising a flexible seal (14) cooperating with the said protection and support element (13).

11. Encoder device according to any one of the preceding claims, characterized in that one lip of a seal (14) of the bearing (1) is in contact with an axial part (13a), fitted over the rotating member of the bearing (1), of the protection and support element (13).

12. Encoder device according to any one of the preceding claims, characterized in that a part (28d, 30d), situated in proximity to the non-rotating member of the bearing (1), of the protection and support element (28, 30), is equipped with a lip seal (29, 31) in contact with the said non-rotating member of the bearing (1).

13. Encoder device according to any one of Claims 1 to 11, characterized in that a part, situated in proximity to the non-rotating member of the bearing (1), of the protection and support element (13) is equipped with a lip seal in contact with a support (15) of a seal (14) of the bearing, secured to the non-rotating member of the bearing (1).

14. Encoder device according to any one of the preceding claims, characterized by an additional protection element (24) comprising an axial part (24a) fitted over the non-rotating member of the bearing (1), in contact with a lip of a seal (23) fixed on the protection and support element (13), and a radial part (24b) extending towards the rotating member of the bearing (1) so as to form a narrow passage (25) with the said rotating member of the bearing (1).

15. Encoder device according to any one of Claims 1 to 10, characterized in that the protection and support element (13, 26) comprises a part cooperating with the non-rotating member of the bearing (1) to form a narrow passage.

16. Encoder device according to any one of the preceding claims, characterized in that the encoder (12) is moulded over the protection and support element.

17. Encoder device according to Claim 15, characterized in that the protection and support element (13) is provided with localized deformations or removals of material (16) used for anchoring the encoder (12).

18. Encoder device according to any one of Claims 6 to 9, characterized in that the encoder (12) is forcibly introduced into the protection and support element (13) and the said protection and support element is equipped with claws (19) intended to be crimped into notches (18) of the encoder.

19. Encoder device according to any one of the preceding claims, characterized in that the encoder (12) is held by an intermediate annular support (20), moulded over one face of an axial part of the protection and support element (13), the said intermediary support being furthermore provided with a circular holding rib (21) cooperating with a circular groove of the encoder.

20. Encoder device according to any one of the preceding claims, characterized in that the encoder (12) is made of material loaded with magnetic particles.

21. Rolling-contact bearing equipped with an encoder for a device for detecting the rotational speed of its rotating race relative to its non-rotating race according to any one of the preceding claims.
